# EUROPÄISCHE PATENTSCHRIFT

(11) **EP 2 555 356 B1**
(45) Veröffentlichungstag und Bekanntmachung des Hinweises auf die Patenterteilung: **25.02.2015**
(21) Anmeldenummer: 12005492.9
(22) Anmeldetag: 27.07.2012
(51) Int. Cl.: H02B 1/21

(54) **Sammelschienenadapter mit einer Tragschiene für die Befestigung eines Schaltgeräts**
Busbar adapter with a support rail for the mounting of an electrical switching device
Adaptateur de barre omnibus doté d'un rail de support pour appareil de commutation électrique

(30) Priorität: 03.08.2011 DE 102011052381
(43) Veröffentlichungstag der Anmeldung: 06.02.2013
(73) Patentinhaber: RITTAL GmbH & Co. KG, 35745 Herborn (DE)
(72) Erfinder: Kayma, Jörg, 35745 Herborn (DE); Plath, Pierre, 35753 Greifenstein (DE); Küster, Frank, 35767 Breitscheid (DE); Kienholz, Matthias, 35444 Biebertal (DE)
(74) Vertreter: Tönhardt, Marion

(56) Entgegenhaltungen:
- DE-C1- 19 515 922
- DE-U1- 20 211 940

## Beschreibung

Die Erfindung betrifft einen Sammelschienenadapter, mit einer Tragschiene für die Befestigung eines Schaltgeräts auf dem Sammelschienenadapter, wobei die Tragschiene in unterschiedlichen Positionen auf dem Sammelschienenadapter befestigbar ist.

Gattungsgemäße Sammelschienenadapter sind in vielfältiger Ausführung, insbesondere hinsichtlich der Befestigung der Tragschiene auf dem Sammelschienenadapter, bekannt.

So beschreibt die DE 202 11 940 U1 einen Sammelschienenadapter, bei dem die Tragschiene mit Hilfe eines Betätigungselements, das bei der Montage mit Hilfe eines Schraubendrehers verstellbar ist, auf der Sammelschiene verklemmt wird.

Aus der DE 42 42 704 C2 ist es bekannt, die Tragschiene auf dem Sammelschienenadapter entweder unmittelbar mit Hilfe zweier Schrauben zu befestigen, oder statt dieser Schrauben domartige hohle Vorsprünge vorzusehen, die in Längsrichtung geschlitzt sind. Dabei ist es vorgesehen, dass die Tragschiene mit den domartigen Vorsprüngen in vorgesehene Löcher einer Lochleiste des Sammelschienenadapters eingreift, wobei zur Festlegung der Tragschiene in die domartigen Vorsprünge Dübel oder Spreizstifte eingetrieben werden.

Eine weitere Kategorie gattungsgemäßer Sammelschienenadapter verwendet Tragschienen, die auf dem Sammelschienenadapter lösbar eingerastet werden können. Bei dem Sammelschienenadapter gemäß der DE 195 15 922 C1 ist dazu ein Rasthebel vorgesehen, der mit der Tragschiene verbunden ist und der in eine Rastverzahnung des Sammelschienenadapters eingreift, wenn die Tragschiene mit dem Sammelschienenadapter in Verbindung gebracht und zur Positionierung in eine Durchlassrichtung verschoben wird. An einem freien Ende des Rasthebels sind Vertiefungen angeordnet, in die ein Schraubendreher oder dergleichen eingesetzt werden kann, um den Rasthebel zum Lösen der Verrastung anzuheben.

Auch die EP 0 917 751 B 1 beschreibt einen Sammelschienenadapter, bei dem die Tragschiene über eine Rastverbindung gehalten wird, wobei an der Tragschiene eine federnde Zunge vorgesehen ist, die am Gehäuse selbsttätig einrastet und die im am Gehäuse befestigten Zustand der Trageschiene mit ihrem freien Ende über eine Stirnfläche der Tragschiene hinausragt. Der Schieber weist eine Handhabe auf, die über die Stirnfläche der Tragschiene hinausragt und mit Hilfe welcher die Rastverbindung zwischen dem Sammelschienenadapter und der Tragschiene gelöst werden kann. Die Handhabe ist wiederum dazu ausgestaltet, um beispielsweise mit Hilfe eines Schraubendrehers betätigt zu werden. Eine entsprechende Rastverbindung, die mit Hilfe einer Handhabe lösbar ist, ist auch aus der DE 20 2004 011 736 U1 bekannt.

Ein wesentlicher Nachteil der aus dem Stand der Technik bekannten Sammelschienenadapter besteht somit darin, dass jeweils zumindest für das Lösen der Arretierung zwischen dem Sammelschienenadapter und einer aufgesetzten Tragschiene stets technische Hilfsmittel, wie beispielsweise Schraubendreher oder dergleichen, benötigt werden.

Es ist daher die Aufgabe der Erfindung, einen gattungsgemäßen Sammelschienenadapter mit einer Tragschiene für die Befestigung eines Schaltgeräts vorzuschlagen, bei dem sowohl die Arretierung der Tragschiene auf dem Sammelschienenadapter als auch das Lösen der Arretierung ohne die Zuhilfenahme technischer Hilfsmittel möglich ist.

Diese Aufgabe löst der Sammelschienenadapter gemäß Patentanspruch 1. Die abhängigen Patentansprüche 2 bis 7 betreffen jeweils bevorzugte Ausführungsformen.

Der erfindungsgemäße Sammelschienenadapter zeichnet sich dadurch aus, dass die Tragschiene Beinelemente und der Sammelschienenadapter Durchlässe aufweist, durch die jeweils eines der Beinelemente der Tragschiene mit einer Klinke so weit von einer ersten Begrenzungsfläche der Durchlässe, auf der die Tragschiene aufliegt, zu einer zweiten Begrenzungsfläche der Durchlässe hindurchragt, dass die jeweilige Klinke der Beinelemente mit einer Haltefläche in einem Abstand zu der zweiten Begrenzungsfläche angeordnet ist, der einer Abmessung eines Schiebers entspricht, der formschlüssig zwischen der Haltefläche der Klinke und der zweiten Begrenzungsfläche einschiebbar ist:

Die Arretierung bzw. Lösung der Arretierung kann somit ausschließlich manuell durch Einschieben bzw. Herausziehen eines im Wesentlichen plattenförmigen Schiebers erfolgen. Vorzugsweise ist der Schieber dazu im Wesentlichen rechteckig ausgeführt und weist eine Dicke auf, welche gerade dem Abstand zwischen der zweiten Begrenzungsfläche der Durchlässe und einer Haltefläche der Klinke entspricht. Somit wird beim Einschieben des Schiebers der sich aus dem Abstand zwischen der zweiten Begrenzungsfläche und der Haltefläche ergebende Freiraum gerade durch den Schieber ausgefüllt, wodurch eine kraftschlüssige Verbindung zwischen der Tragschiene und dem Sammelschienenadapter hergestellt wird. Es wird deutlich, dass die erste und die zweite Begrenzungsfläche gerade in derjenigen Fläche liegen, in welcher ein erstes bzw. ein zweites Ende des Durchlasses liegen.

Bei der bevorzugten Ausführungsform der Erfindung werden die Durchlässe an zwei parallel zueinander verlaufenden Wänden des Sammelschienenadapters jeweils von voneinander beabstandeten Nocken gebildet. Die Durchlässe entsprechen somit gerade demjenigen Freiraum, welcher sich zwischen benachbarten Nocken ausbildet. Der Abstand der Nocken ist somit gerade danach ausgerichtet, dass der entstehende Freiraum für den Durchlass eines Beinelements der Tragschiene geeignet ist. Vorzugsweise sind die Nocken gerade derart zueinander beanstandet, dass die Beinelemente formschlüssig durch die Durchlässe hindurch treten. Bei dieser Ausführungsform werden die Begrenzungsflächen folglich von entsprechenden ersten und zweiten Flächen der Nocken gebildet, welche in derjenigen Fläche liegen, in welcher ein erstes bzw. ein zweites Ende der Durchlässe liegen.

Bei der bevorzugten Ausführungsform ist weiterhin vorgesehen, dass die Nocken freie Enden aufweisen, wobei die freien Enden der Nocken beider Wände in Richtung der jeweils anderen Wand ausgerichtet sind. Dabei stehen die Nocken jeweils mit ihrem Ende, das dem freien Ende abgewandt ist, mit der Wand, der sie zugeordnet sind, in Verbindung.

Bei einer weiteren Ausführungsform der Erfindung ist vorgesehen, dass die Tragschiene zwei parallele Reihen von Beinelementen aufweist, die äquidistant zueinander angeordnet sind. Weiterhin weist der Sammelschienenadapter zwei parallele Reihen von Durchlässen auf, die unter einem Abstand äquidistant zueinander angeordnet sind, der dem Abstand entspricht, mit dem die Beinelemente zueinander angeordnet sind. Es ist vorgesehen, dass der Abstand der parallelen Reihen von Durchlässen mit dem Abstand der parallelen Reihen von Beinelementen identisch ist. Vorzugsweise sind die Beinelemente an parallelen Längsseiten der Tragschiene vorgesehen, wobei über die gesamte Länge der genannten Längsseiten Beinelemente vorgesehen sein können. Dies ermöglicht eine verdrehsichere Arretierung der Tragschiene auf dem Sammelschienenadapter.

Für eine besonders stabile Befestigung der Tragschiene auf dem Sammelschienenadapter kann vorgesehen sein, dass mindestens eines der Beinelemente eine erste Führungsfläche aufweist und mindestens einem der Durchlässe eine zweite Führungsfläche in Einsteckrichtung vorgelagert ist, wobei die erste und die zweite Führungsfläche formschlüssig miteinander in Kontakt stehen, wenn die Tragschiene auf dem Sammelschienenadapter befestigt ist. Bei dieser Ausführungsform kommen den Beinelementen somit neben der Funktion, eine kraftschlüssige Verbindung mit dem Sammelschienenadapter herzustellen, die zusätzliche Funktion zu, wonach eine formschlüssige Verbindung zwischen korrespondierenden Führungsflächen des Beinelementes und des Sammelschienenadapters der hergestellten Verbindung zwischen beiden Komponenten zusätzliche Stabilität, insbesondere hinsichtlich Verdrehungen in der Ebene senkrecht zur Einsteckrichtung der Beinelemente durch die Durchlässe, verleiht.

Besonders bevorzugt ist die vorgenannte Ausführungsform derart ausgestaltet, dass die Beinelemente einen im Querschnitt rechteckigen Schaft aufweisen, von dem drei Seitenflächen als erste Führungsflächen ausgebildet sind und an der vierten Seitenfläche die Klinke ausgebildet ist. Dabei sollen die Durchlässe im Wesentlichen denselben Querschnitt wie die Beinelemente aufweisen, wobei mindestens einem der Durchlässe drei zweite Führungsflächen in Einsteckrichtung vorgelagert sind, die zumindest abschnittsweise mit jeweils einer der drei ersten Führungsflächen formschlüssig in Kontakt stehen, wenn die Tragschiene auf dem Sammelschienenadapter befestigt ist. Dadurch, dass die Durchlässe und die Beinelemente im Querschnitt im Wesentlichen denselben rechteckigen Querschnitt aufweisen, können die Beinelemente auch nur bei bestimmter relativer Lage zwischen der Tragschiene und dem Sammelschienenadapter durch die Durchlässe hindurch treten. Andererseits wird durch den rechteckigen Querschnitt der vorgenannten Komponenten gewährleistet, dass die Tragschiene in zwei um 180° zueinander verdrehten Lagen relativ zu dem Sammelschienenadapter auf diesem befestigt werden kann.

Eine weitere Ausführungsform der Erfindung sieht vor, dass die Tragschiene zur Aufnahme eines Schaltgeräts zumindest abschnittsweise als U-Profil mit parallelen Innenflächen seiner Flansche ausgebildet ist. Dabei soll die Tragschiene Endstücke aufweisen, die in Längsrichtung des U-Profils zwischen den parallelen Innenflächen der Flansche in unterschiedlichen Positionen verrastbar sind, wobei die Endstücke in Richtung senkrecht zu der Längsrichtung des U-Profils eine Abmessung aufweisen können, die im Wesentlichen dem Abstand der parallelen Innenflächen der Flansche entspricht. Bei dieser Ausführungsform ist somit vorgesehen, dass das Schaltgerät in demjenigen Freiraum aufgenommen wird, der einerseits von den parallelen Innenflächen der Flansche und andererseits von den wahlweise verrastbaren Endstücken abgegrenzt wird. Der Freiraum ist daher in Richtung senkrecht zu den parallelen Innenflächen fix, kann jedoch in Längsrichtung durch Variation der Position der Endstücke angepasst werden. Zweckmäßigerweise sind Rastpositionen für die Endstücke vorgesehen, in welchen die Endstücke in Längsrichtung gerade eine Abmessung abgrenzen, welche einer entsprechenden Abmessung eines von der Tragschiene aufzunehmenden Schaltgeräts entspricht.

Da bei der vorgenannten Ausführungsform der von der Tragschiene abgegrenzte Freiraum senkrecht zu den parallelen Innenflächen der Flansche des U-Profils fix ist, ist bei einer weiteren Ausführungsform der Erfindung vorgesehen, dass die Beinelemente an einer Basisplatte der Tragschiene bereitgestellt sind, auf der das als ein separates Bauteil ausgebildete U-Profil verriegelbar ist. Sollte somit bei einer gegebenen Tragschiene der zwischen den parallelen Innenfläche der Flansche eines U-Profils der Tragschiene abgegrenzte Freiraum nicht ausreichend sein, um ein zu befestigendes Schaltgerät aufzunehmen, so ist bei der vorgenannten Ausführungsform gerade vorgesehen, dass die Tragschiene aus einer Basisplatte, an welcher die Beinelemente vorgesehen sind, und einem als separates Bauteil ausgebildeten U-Profil zusammengesetzt ist. Das U-Profil der Tragschiene kann somit ausgewechselt und an das aufzunehmende Schaltgerät angepasst werden.

Weitere Einzelheiten der Erfindung werden anhand der nachstehenden Figuren erläutert. Dabei zeigt:
- Figur 1: eine perspektivische Ansicht einer erfindungsgemäßen Tragschiene;
- Figuren 2a bis 2c: perspektivische Ansichten eines U-Profils mit verstellbaren Endstücken in drei verschiedenen Rastpositionen;
- Figuren 3a und 3b: Draufsichten auf einen erfindungsgemäßen Sammelschienenadapter mit eingeschobenem und nicht eingeschobenem Schieber; und
- Figuren 4a und 4b: perspektivische Ansichten eines erfindungsgemäßen Sammelschienenadapters als Explosionsdarstellung sowie im zusammengesetzten Zustand.

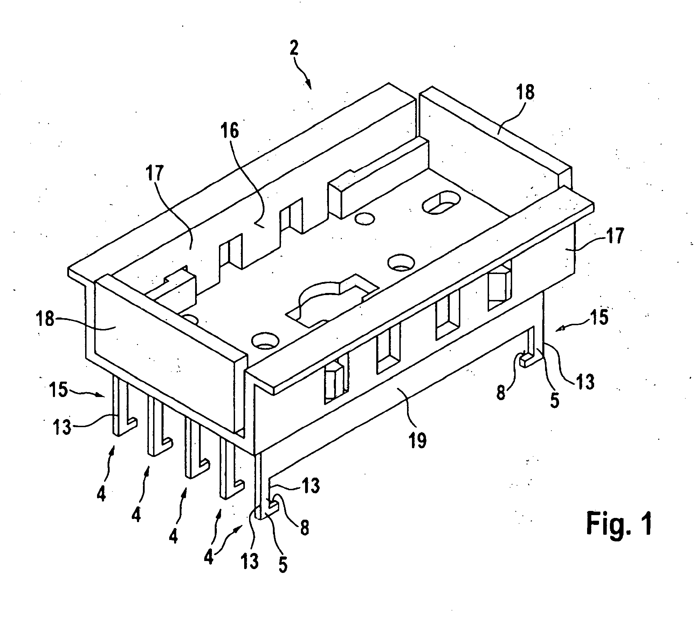

Figur 1 zeigt eine erfindungsgemäße Tragschiene 2, die im Wesentlichen aus einer Basisplatte 19 und einem darauf befestigten U-Profil besteht, wobei das U-Profil zwei Flansche 17 aufweist, die parallel zueinander verlaufende Innenflächen 16 umfassen. Endstücke 18 sind dazu vorgesehen, um in Längsrichtung des U-Profils variabel verrastet werden zu können. An der Basisplatte 19 sind auch die Beinelemente 4 ausgebildet, welche einen Schaft 15 mit im Wesentlichen rechteckigem Querschnitt aufweisen, wobei drei der Seitenflächen des Schafts 15 als erste Führungsflächen 13 ausgebildet sind, und an der vierten Führungsfläche 13 eine Klinke 5 angeformt ist. Die Führungsflächen 13 sind dazu vorgesehen, um mit entsprechenden zweiten Führungsflächen des Sammelschienenadapters formschlüssig in Kontakt zu treten, wenn die Tragschiene 2 auf einen Sammelschienenadapter aufgesetzt wird. An den freien Enden der Beinelemente 4 ist jeweils eine Klinke 5 vorgesehen, welche eine Haltefläche 8 umfasst. Die Haltefläche 8 ist insoweit erfindungswesentlich, als dass sie dazu ausgebildet ist, um im eingesetzten Zustand der Tragschiene 2 auf einem Sammelschienenadapter zwischen sich und einer zweiten Begrenzungsfläche des Sammelschienenadapters einen Abstand auszubilden, der einer Abmessung eines Schiebers entspricht, der formschlüssig zwischen der Haltefläche 8 der Klinke 5 und der zweiten Begrenzungsfläche einschiebbar ist.

Es ist ebenfalls zu erkennen, dass die Tragschiene 2 zwei parallele Reihen von Beinelementen 4 aufweist, wobei zumindest die Beinelemente 4 derselben Reihe äquidistant zueinander angeordnet sind. Vorzugsweise ist der Abstand sämtlicher Paare von benachbarten Beinelementen 4 beider Reihen identisch.

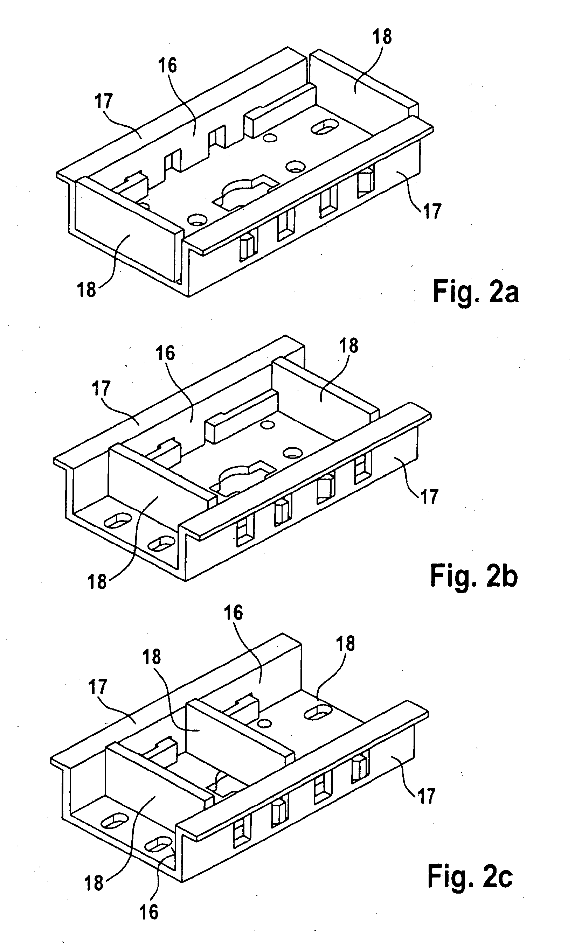

Die Figuren 2a bis 2c zeigen drei perspektivische Ansichten eines U-Profils einer erfindungsgemäßen Tragschiene, wobei in jeder der gezeigten Ansichten die Endstücke 18 zur Aufnahme eines Schaltgeräts einer bestimmten Abmessung in entsprechenden Positionen verrastet sind. Es ist zu erkennen, dass das U-Profil parallele Innenflächen 16 seiner Flansche 17 aufweist, wobei Endstücke 18 in Längsrichtung des U-Profils zwischen den parallelen Innenflächen 16 der Flansche 17 in unterschiedlichen Positionen verrastbar sind. Zweckmäßigerweise sind die Endstücke 18 gerade derart bemessen, dass sie eine Abmessung aufweisen, die im Wesentlichen dem Abstand der parallelen Innenflächen 16 der Flansche 17 entspricht.

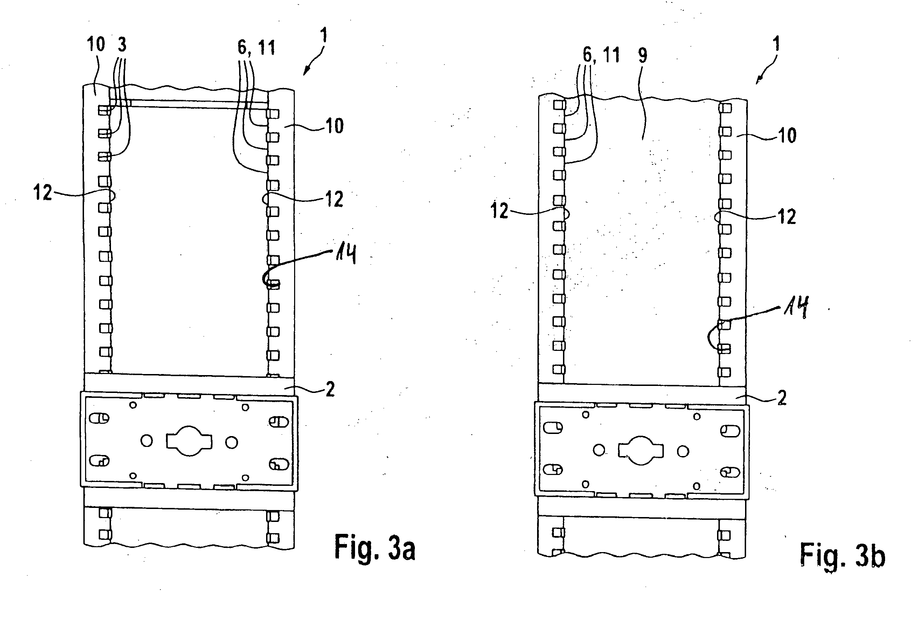

Die Figur 3a zeigt eine Draufsicht auf einen erfindungsgemäßen Sammelschienenadapter 1 mit aufgesetzter Tragschiene 2, wobei jedoch noch kein Schieber für die Fixierung der Tragschiene 2 eingeschoben ist. Die Figur 3b zeigt den Sammelschienenadapter 1 mit aufgesetzter Tragschiene 2 gemäß Figur 3a, wobei in Figur 3b ein Schieber 9 zur Fixierung der Tragschiene 2 eingeschoben ist. Es ist zu erkennen, dass der Schieber 9 in der Draufsicht die Nocken 11 rückseitig hintergreift und somit ein Herauslösen der nicht dargestellten Beinelemente der Tragschiene 2 verhindert, da der Schieber 9 wiederum rückseitig von den nicht dargestellten Klinken der Beinelemente der Tragschiene 2 hintergriffen wird. Ebenfalls zu erkennen ist, dass die Nocken 11 freie Enden 12 aufweisen, wobei die freien Enden 12 der Nocken 11 beider Wände 10 in Richtung der jeweils anderen Wand 10 ausgerichtet sind.

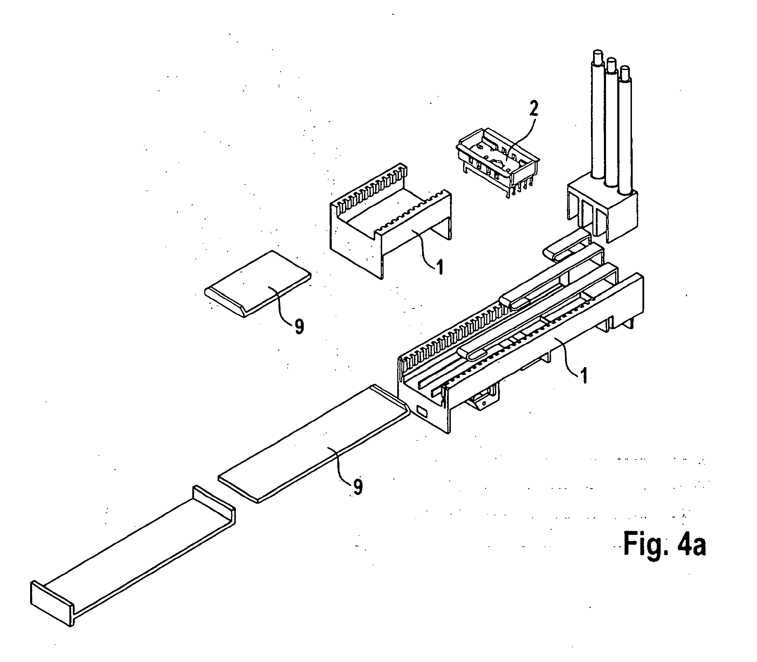

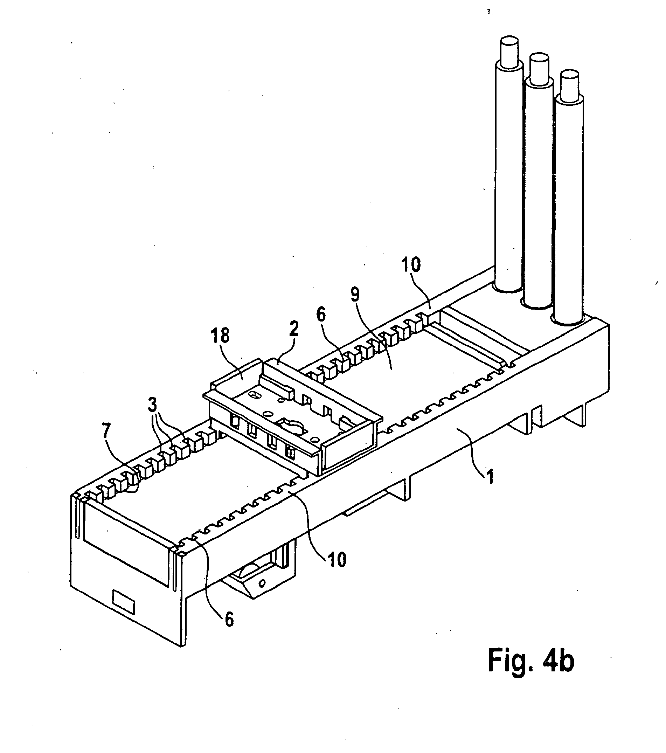

In den Figuren 4a und 4b ist noch einmal ein erfindungsgemäßer Sammelschienenadapter 1 mit einer Tragschiene 2 dargestellt, wobei die Figur 4b den fixierten Zustand zeigt, d. h. mit eingeschobenen Schieber 9. In der Darstellung von Figur 4b ist auch zu erkennen, dass die Durchlässe 3 an zwei parallel zueinander verlaufenden Wänden 10 des Sammelschienenadapters 1 jeweils von voneinander beabstandeten Nocken 11 gebildet werden. Die Nocken weisen eine erste Begrenzungsfläche 6 und eine zweite Begrenzungsfläche 7 auf, wobei in dem in Figur 4b gezeigten Zustand die zweiten Begrenzungsflächen 7 mit dem Schieber 9 in Kontakt stehen, um eine kraftschlüssige Verbindung des Sammelschienenadapters 1 mit der Tragschiene 2 zu erzeugen.

## Patentansprüche

1. Sammelschienenadapter (1), mit einer Tragschiene (2) für die Befestigung eines Schaltgeräts auf dem Sammelschienenadapter (1), wobei die Tragschiene (2) in unterschiedlichen Positionen auf dem Sammelschienenadapter (1) befestigbar ist, **dadurch gekennzeichnet, dass** die Tragschiene (2) Beinelemente (4) und der Sammelschienenadapter (1) Durchlässe (3) aufweist, durch die jeweils eines der Beinelemente (4) der Tragschiene (2) mit einer Klinke (5) so weit von einer ersten Begrenzungsfläche (6) der Durchlässe (3), auf der die Tragschiene (2) aufliegt, zu einer zweiten Begrenzungsfläche (7) der Durchlässe (3) hindurchragt, dass die jeweilige Klinke (5) der Beinelemente (4) mit einer Haltefläche (8) in einem Abstand zu der zweiten Begrenzungsfläche (7) angeordnet ist, der einer Abmessung eines Schiebers (9) entspricht, der formschlüssig zwischen der Haltefläche (8) der Klinke (5) und der zweiten Begrenzungsfläche (7) einschiebbar ist.

2. Sammelschienenadapter (1) nach Anspruch 1, **dadurch gekennzeichnet, dass** die Durchlässe (3) an zwei parallel zueinander verlaufenden Wänden (10) des Sammelschienenadapters (1) jeweils von voneinander beabstandeten Nocken (11) gebildet werden.

3. Sammelschienenadapter (1) nach Anspruch 2, **dadurch gekennzeichnet, dass** die Nocken (11) freie Enden (12) aufweisen, wobei die freien Enden (12) der Nocken (11) beider Wände (10) in Richtung der jeweils anderen Wand (10) ausgerichtet sind.

4. Sammelschienenadapter (1) nach Anspruch 1, **dadurch gekennzeichnet, dass** die Tragschiene (2) zwei parallele Reihen von Beinelementen (4) aufweist, die äquidistant zueinander angeordnet sind, und der Sammelschienenadapter (1) zwei parallele Reihen von Durchlässen (3) aufweist, die unter einem Abstand äquidistant zueinander angeordnet sind, der dem Abstand entspricht, mit dem die Beinelemente (4) zueinander angeordnet sind, wobei der Abstand der parallelen Reihen von Durchlässen (3) dem Abstand der parallelen Reihen von Beinelementen (4) entspricht.

5. Sammelschienenadapter (1) nach einem der vorangegangenen Ansprüche, **dadurch gekennzeichnet, dass** mindestens eines der Beinelemente (4) eine erste Führungsfläche (13) aufweist und mindestens einem der Durchlässe (3) eine zweite Führungsfläche (14) in Einsteckrichtung vorgelagert ist, wobei die erste und die zweite Führungsfläche (13, 14) formschlüssig miteinander in Kontakt stehen, wenn die Tragschiene (2) auf dem Sammelschienenadapter (1) befestigt ist.

6. Sammelschienenadapter (1) nach einem der vorangegangenen Ansprüche, **dadurch gekennzeichnet, dass** die Tragschiene (2) zur Aufnahme eines Schaltgeräts zumindest abschnittsweise als U-Profil mit parallelen Innenflächen (16) seiner Flansche (17) ausgebildet ist, mit Endstücken (18), die in Längsrichtung des U-Profils zwischen den parallelen Innenflächen (16) der Flansche (17) in unterschiedlichen Positionen verrastbar sind.

7. Sammelschienenadapter (1) nach Anspruch 6, **dadurch gekennzeichnet, dass** die Beinelemente (4) an einer Basisplatte (19) der Tragschiene (2) bereitgestellt sind, auf der das als ein separates Bauteil ausgebildete U-Profil verriegelbar ist.

## Claims

1. A busbar adapter (1), comprising a mounting rail (2) for attaching a switching device to the busbar adapter (1), wherein said mounting rail (2) can be attached to the busbar adapter (1) at different positions, **characterized in that** the mounting rail (2) comprises leg elements (4) and the busbar adapter (1) comprises passages (3) through which a respective one of the leg elements (4) of the mounting rail (1) extends with a latch (5) from a first boundary surface (6) of the passages (3) on which the mounting rail (2) rests, to a second boundary surface (7) of the passages (3) such that the respective latch (5) of the leg elements (4) is, with a retaining surface (8) thereof, arranged in a distance to the second boundary surface (7) which corresponds to a dimension of a slider (9) positively insertable between the retaining surface (8) of the latch (5) and the second boundary surface (7).

2. The busbar adapter (1) according to claim 1, **characterized in that** the passages (3) are respectively formed by spaced apart cams (11) at two parallel running walls (10) of the busbar adapter (1).

3. The busbar adapter (1) according to claim 2, **characterized in that** the cams (11) comprise free ends (12), wherein the free ends (12) of the cams (11) of both walls (10) are oriented towards the respective other wall (10).

4. The busbar adapter (1) according to claim 1, **characterized in that** the mounting rail (2) comprises two parallel rows of equidistantly spaced leg elements (4) and the busbar adapter (1) comprises two rows of equidistantly spaced passages (3), the distance corresponding to that of the leg elements (4), wherein the distance of the parallel rows of passages (3) corresponds to the distance of the parallel rows of leg elements (4).

5. The busbar adapter (1) according to one of the preceding claims, **characterized in that** at least one of the leg elements (4) comprises a first guiding surface (13), and a second guiding surface (14) is arranged, viewed in insertion direction, in front of at least one of the passages (3), wherein the first and the second guiding surfaces (13, 14) are positively contacting each other when the mounting rail (2) is attached to the busbar adapter (1).

6. The busbar adapter (1) according to one of the preceding claims, **characterized in that** the mounting rail (2) for receiving a switching device is formed at least in sections as a U-beam having parallel inner surfaces (16) of flanges (17) thereof, comprising end pieces (18) which can be latched in different positions in longitudinal direction of the U-beam between the parallel inner surfaces (16) of the flanges (17).

7. The busbar adapter (1) according to claim 6, **characterized in that** the leg elements (4) are provided at a base plate (19) of the mounting rail (2), on which the U-beam, configured as a separate component, can be locked.

## Revendications

1. Adaptateur pour barre de distribution (1), comprenant un rail porteur (2) pour la fixation d'un appareil de commutation sur l'adaptateur pour barre de distribution (1), étant entendu que le rail porteur (2) peut être fixé dans différentes positions sur l'adaptateur pour barre de distribution (1), **caractérisé en ce que** le rail porteur (2) présente des éléments de jambe (4) et l'adaptateur pour barre de distribution (1) présente des gorges (3) au travers desquelles l'un des éléments de jambe (4) du rail porteur (2) s'étend respectivement avec un cliquet (5) à l'opposé d'une première surface de délimitation (6) des gorges (3), sur laquelle le rail porteur (2) prend appui, jusqu'à une deuxième surface de délimitation (7) des gorges (3) de telle sorte que le cliquet (5) respectif des éléments de jambe (4) est agencé avec une surface de retenue (8) à une distance par rapport à la deuxième surface de délimitation (7) qui correspond à une dimension d'un coulisseau (9) qui peut être inséré de façon solidaire entre la surface de retenue (8) du cliquet (5) et la deuxième surface de délimitation (7).

2. Adaptateur pour barre de distribution (1) selon la revendication 1, **caractérisé en ce que** les gorges (3) sont formées sur deux parois (10) de l'adaptateur pour barre de distribution (1) qui s'étendent parallèlement l'une à l'autre, respectivement, à partir de cames (11) situées à distance l'une de l'autre.

3. Adaptateur pour barre de distribution (1) selon la revendication 2, **caractérisé en ce que** les cames (11) présentent des extrémités libres (12), étant entendu que les extrémités libres (12) des cames (11) des deux parois (10) sont orientées dans la direction de l'autre paroi (10) respective.

4. Adaptateur pour barre de distribution (1) selon la revendication 1, **caractérisé en ce que** le rail porteur (2) présente deux rangées parallèles d'éléments de jambe (4) qui sont agencés de façon équidistante les uns par rapport aux autres et l'adaptateur pour barre de distribution (1) présente deux rangées parallèles de gorges (3) qui sont agencées de façon équidistante les unes par rapport aux autres à une distance qui correspond à la distance à laquelle les éléments de jambe (4) sont agencés les uns par rapport aux autres, étant entendu que la distance des rangées parallèles de gorges (3) correspond à la distance des rangées parallèles d'éléments de jambe (4).

5. Adaptateur pour barre de distribution (1) selon l'une des revendications précédentes, **caractérisé en ce qu'**au moins un des éléments de jambe (4) présente une première surface de guidage (13) et une deuxième surface de guidage (14) est agencée en amont d'au moins une des gorges (3) dans la direction d'insertion, étant entendu que les première et deuxième surfaces de guidage (13, 14) sont en contact l'une avec l'autre de façon solidaire lorsque le rail porteur (2) est fixé sur l'adaptateur pour barre de distribution (1).

6. Adaptateur pour barre de distribution (1) selon l'une des revendications précédentes, **caractérisé en ce que** le rail porteur (2), aux fins de la réception d'un appareil de commutation, est réalisé au moins sur une section en forme de profil en U ayant des surfaces intérieures parallèles (16) de sa flasque (17), avec des pièces d'extrémité (18) qui peuvent s'engager dans différentes positions entre les surfaces intérieures parallèles (16) de la flasque (17) dans la direction longitudinale du profil en U.

7. Adaptateur pour barre de distribution (1) selon la revendication 6, **caractérisé en ce que** les éléments de jambe (4) sont prévus sur une plaque de base (19) du rail porteur (2), sur laquelle le profil en U réalisé comme composant séparé peut être verrouillé.
